# EUROPÄISCHE PATENTSCHRIFT

(11) **EP 3 953 623 B1**
(45) Veröffentlichungstag und Bekanntmachung des Hinweises auf die Patenterteilung: **10.05.2023**
(21) Anmeldenummer: 20717829.4
(22) Anmeldetag: 06.04.2020
(51) Int. Cl.: F16K 17/26, F16K 1/46, F16K 17/30, F16K 27/02

(54) **EXPLOSIONSSCHUTZVENTIL ZUR ENTKOPPLUNG VON ANLAGEN- ODER WERKTEILEN MIT EINER LAGERANORDNUNG FÜR DEN VENTIL-SCHLIESSKÖRPER**
EXPLOSION PROTECTION VALVE FOR DECOUPLING SYSTEM PARTS OR WORKPIECES, COMPRISING A BEARING ASSEMBLY FOR THE VALVE CLOSING BODY
SOUPAPE ANTIDÉFLAGRANTE POUR LE DÉSACCOUPLEMENT DE PARTIES D'INSTALLATIONS OU DE PIÈCES, DOTÉE D'UN ENSEMBLE SUPPORT POUR LE CORPS DE FERMETURE DE LA SOUPAPE

(30) Priorität: 08.04.2019 DE 102019205026
(43) Veröffentlichungstag der Anmeldung: 16.02.2022
(73) Patentinhaber: Rico Sicherheitstechnik AG, 9100 Herisau (CH)
(72) Erfinder: ZAUGG, Loïc, 9100 Herisau (CH); ALOI, Walter, 9443 Widnau (CH); KERN, Jürgen, 8570 Weinfelden (CH); AGATONOVIC, Aleksandar, 8360 Eschlikon (CH); ZELLWEGER, Daniel, 9056 Gais (CH)
(74) Vertreter: Rau, Schneck & Hübner Patentanwälte Rechtsanwälte PartGmbB
(86) Internationale Anmeldenummer: PCT/EP2020/059720
(87) Internationale Veröffentlichungsnummer: WO 2020/207948

(56) Entgegenhaltungen:
- DE-B4- 10 213 865

## Beschreibung

Die Erfindung betrifft ein Explosionsschutzventil zur Entkopplung von Anlagen- oder Werkteilen zum Einbau in eine Rohrleitung mit den im Oberbegriff des Anspruches 1 angegebenen Merkmalen.

Derartige Explosionsschutzventile sind aus einer Vielzahl von Druckschriften insbesondere der Anmelderin bekannt. So ist das grundsätzliche Funktionsprinzip dieser Explosionsschutzventile mit einem Gehäuse, mit einem innerhalb des Gehäuses an einer Führungsstange axial geführten Schließkörper, der aus einer definierten Offenstellung bei einer Druck- oder Sogwelle in der Rohrleitung in wenigstens einer Schließbewegungsrichtung in eine dichtende Schließstellung verschiebbar ist, mit einer mit dem Schließkörper in Wirkverbindung stehenden Federanordnung an der Führungsstange zum Halten des Schließkörpers in der Offenstellung und mit jeweils das Ende der Führungsstange tragenden Lageranordnungen, die jeweils über mindestens eine Aufhängetraverse an das Gehäuse angebunden sind, aus der CH 694 303 A5 oder der CH 694 377 A5 bekannt.

Bei den gezeigten Explosionsschutzventilen sind die Aufhängetraversen für die Lageranordnungen der Führungsstange jeweils fest mit dem Ventilgehäuse verbunden, beispielsweise durch Einschweißen oder Verschraubung. Damit können Fertigungstoleranzen beispielsweise durch Schweißverzug oder Montage der einzelnen Bauteile nicht oder zumindest nicht definiert ausgeglichen werden.

Ferner besteht bei den gezeigten Konstruktionen die Problematik, dass der freie Strömungsquerschnitt des Ventils nicht nur durch die eigentlichen Lageranordnungen für den Schließmechanismus, sondern durch zusätzliche Funktionsmittel beeinträchtigt wird. Solche Funktionsmittel können z.B. durch die notwendige, von außen rückstellbare Verriegelungsvorrichtung des Schließkörpers in seiner Schließstellung oder durch Abtasteinrichtungen zur Erzeugung eines für die Ventilstellung repräsentativen elektrischen Signals gebildet sein.

Explosionsschutzventile mit dem grundsätzlichen Aufbau und Funktionsablauf sowie Aufhängungen mit den geschilderten Problemen sind auch der DE 102 13 865 B4, EP 1 579 134 B1, EP 1 897 668 B1 und DE 101 41 348 B4 der Anmelderin entnehmbar.

Der Erfindung liegt die Aufgabe zugrunde, ein Explosionsschutzventil der gattungsgemäßen Art so zu verbessern, dass insbesondere zur Optimierung des Ventil-Dichtverhaltens Toleranzen im Konstruktionsaufbau des Ventils besser ausgeglichen werden können.

Diese Aufgabe wird laut Kennzeichnungsteil des Anspruches 1 dadurch gelöst, dass die Aufhängung der Lageranordnungen für die den Schließkörper tragenden Führungsstange spielbehaftet in einer Aufnahmeöffnung im Gehäuse stattfindet. Durch diese Art "schwimmende Lagerung" wird zwischen der Aufhängetraverse und dem Gehäuse sogenannte "konstruktive Luft" geschaffen, was eben den gewünschten Toleranzausgleich ermöglicht.

In den abhängigen Ansprüchen 2 bis 6 sind bevorzugte Weiterbildungen dieser spielbehafteten Lagerung angegeben. So kann laut Anspruch 2 die mindestens eine Aufhängetraverse über einen Aufnahmeadapter am Gehäuse gelagert sein, der in einem flexiblen Haltering sitzt. Dieser flexible Haltering stabilisiert die Befestigung der Aufhängetraverse innerhalb des möglichen Spiels und kann gleichzeitig für eine zuverlässige Abdichtung des Ventilgehäuses im Bereich der Anbindung der Aufhängetraverse an das Gehäuse sorgen. Der flexible Halterring erfüllt so eine Doppelfunktion.

Obwohl der flexible Haltering als einfacher O-Ring ausgestaltet sein kann, ist die in Anspruch 3 angegebene Ausbildung des flexible Halterings nach Art eines Kantenschutzprofils vorteilhaft, da er mit einer Lagernut auf dem Rand der Aufnahmeöffnung des Gehäuses befestigt werden kann. Dies dient einer Stabilisierung der Lagerung des Halterings am Gehäuse und gleichzeitig einer Montagevereinfachung.

Ein umfassender Toleranzausgleich ist möglich, wenn das Lagerspiel der Aufhängetraversen - wie in Anspruch 4 angegeben - in radialer und axialer Richtung wirkt.

Die spielbehaftete Lagerung gemäß der Erfindung kann konstruktiv besonders geschickt umgesetzt werden, wenn an dem ansonsten zylindrischen, rohrförmigen Gehäuseabschnitt jeweils eine plane Lagerfläche für die Lagerung der Aufhängetraverse in der Aufnahmeöffnung angelegt wird (Anspruch 5). Damit vereinfacht sich insbesondere die Einbindung des flexiblen Halterings in den Konstruktionsaufbau. Gleichzeitig wird die Abdichtung des Ventilgehäuses optimiert, da die zwei Dichtflächen parallel zueinander stehen. Ansonsten würde die plane Dichtfläche des Aufnahmeadapters auf dem ansonsten zylindrischen, rohrförmigen Gehäuseabschnitt abgedichtet werden müssen.

Laut Anspruch 6 kann die plane Lagerfläche in den Lagerabschnitt vorzugsweise eingeprägt sein, was insbesondere bei einem gleichzeitigen Stanzen der Aufnahmeöffnung herstellungstechnisch besonders rationell ist.

Die Ansprüche 7 bis 10 beschäftigen sich mit einem weiteren Aspekt der Erfindung, dessen zugrundeliegende Problematik eingangs ebenfalls angesprochen wurde. So können die Aufhängetraversen nicht nur der Lagerung der Schließkörpermechanik, sondern auch der Aufnahme und Integration von weiteren Funktionsmitteln, wie einer Verriegelungsvorrichtung für die Schließkörper-Mechanik und/oder einer Abtasteinrichtung für die Ventilstellung dienen. Diese Funktionsintegration kann in besonders vorteilhafter Weise in Zusammenwirken mit der spielbehafteten Lagerung der Aufhängetraversen eingesetzt werden, da sich dann Toleranzen innerhalb des Konzeptionsaufbaus des Explosionsschutzventils nicht negativ auf die Funktion der genannten Funktionsmittel auswirken.

Dementsprechend sieht also Anspruch 7 vor, dass in die Aufhängetraversen Funktionsmittel der Verriegelungsvorrichtung und/oder der Abtasteinrichtung für die Ventilstellung integriert sind.

Laut Anspruch 8 ist es möglich, dass alle in das Gehäuse eingreifenden Funktionsmittel in eine jeweilige Aufhängetraverse integriert sind. Damit entfallen grundsätzlich konstruktive Elemente, die neben den Aufhängetraversen den freien Strömungsquerschnitt stören würden.

Gemäß einer weiteren bevorzugten Ausführungsform gemäß Anspruch 9 können alle Aufhängetraversen für die Aufnahme von Funktionsmitteln eingerichtet sein. So ist beispielsweise bei einem bidirektional wirkenden Explosionsschutzventil für die Funktionsmechanik des Schließkörpers für jede Auslöserichtung eine Verriegelungsvorrichtung sowie eine Abtasteinrichtung vorzusehen, was in Summe vier Funktionsmittel ergibt. Diese können entsprechend über vier Aufhängetraversen für die Schließkörpermechanik integral in den Aufbau des Explosionsschutzventils einbezogen werden.

Falls Aufhängetraversen nicht mit Funktionsmitteln belegt werden, kann der eingangs erwähnte Aufnahmeadapter zur Lagerung der Aufhängetraverse in der Aufnahmeöffnung als Verschlussdeckel ausgebildet sein. Damit ist die Dichtheit des Explosionsschutzventils auch bei nicht belegter Aufhängetraverse gewährleistet.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine Ansicht eines Explosionsschutzventils aus Pfeilrichtung I nach Fig. 2,
- Fig. 2: einen Axialschnitt des Explosionsschutzventils gemäß der Schnittlinie II-II nach Fig. 1,
- Fig. 3: eine in der Schnittebene von Fig. 2 weggebrochene Perspektivdarstellung des Explosionsschutzventils gemäß Fig. 1,
- Fig. 4 und 5: vergrößerte Detailschnitte der Einzelheiten IV und V gemäß Fig. 2 sowie
- Fig. 6: einen Dichtungsring in einer zweiten Ausführungsform im Querschnitt.

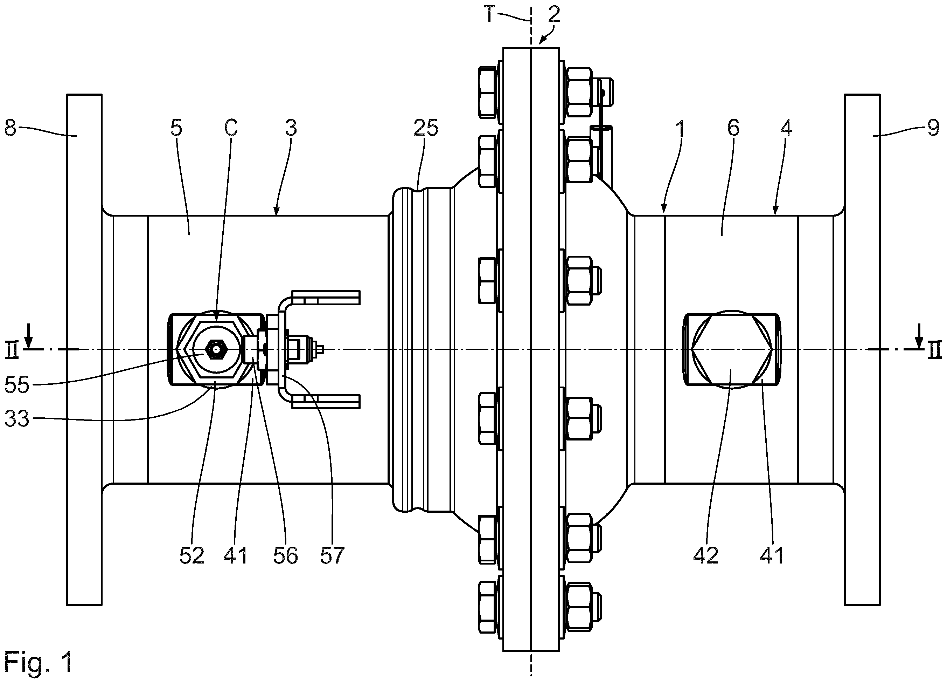

Wie aus den Fig. 1 bis 3 hervorgeht, weist das gezeigte Explosionsschutzventil ein Gehäuse 1 auf, das aus zwei an einer mittigen Flanschverbindung 2 lösbar miteinander verbundenen Gehäusehälften 3, 4 zusammengesetzt ist. Zu der Flanschverbindung 2 hin sind die beiden Gehäusehälften 3, 4 gegenüber ihren rohrförmigen Gehäuseabschnitten 5, 6 radial erweitert, um im Bereich des noch näher zu erörternden Schließkörpers 7 des Ventils einen ausreichenden Strömungsquerschnitt durch das Ventil zu gewährleisten. An den der Flanschverbindung 2 abgewandten Enden sind die Gehäusehälften 3, 4 wiederum mit Anschlussflanschen 8, 9 versehen, mit denen das Explosionsschutzventil in eine nicht dargestellte Rohrleitung eingebaut werden kann.

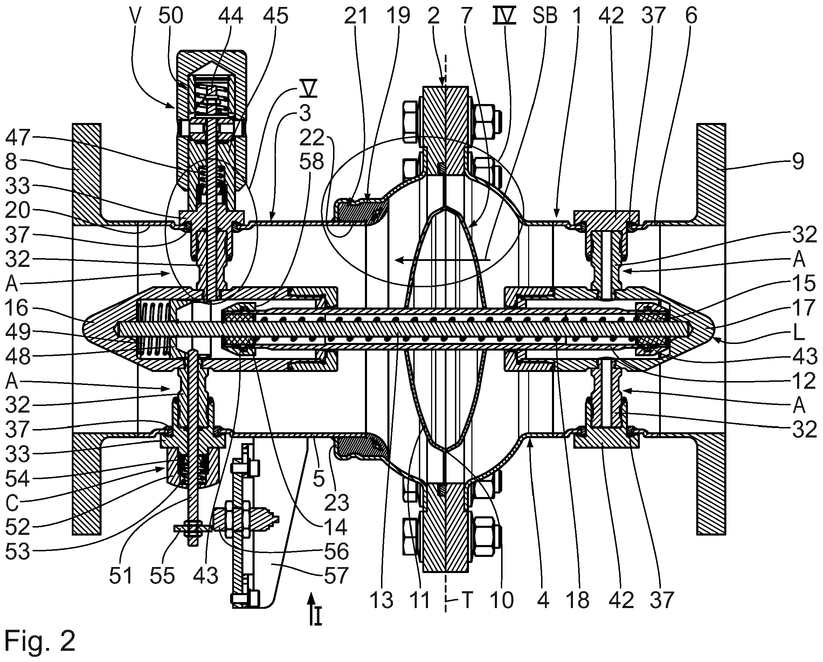

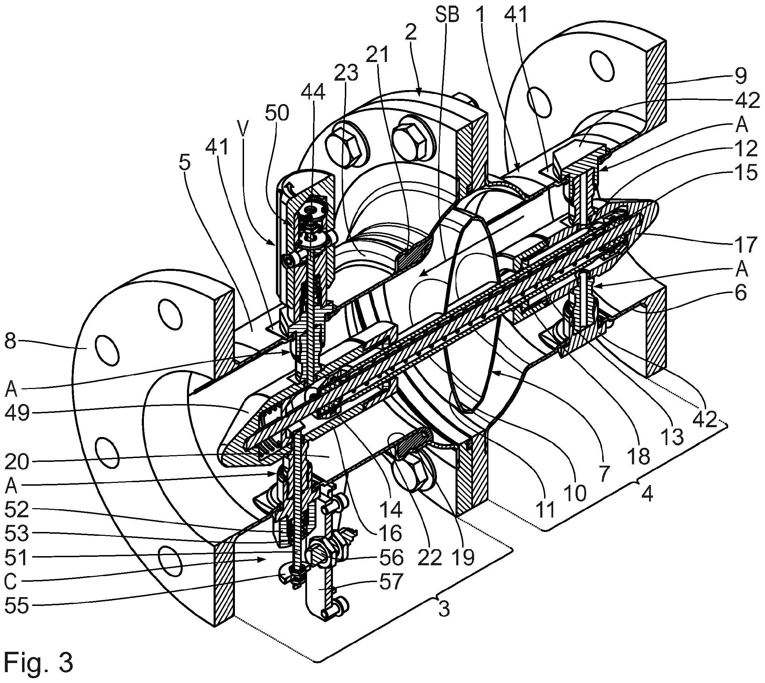

Anhand von Fig. 2 und 3 ist der innere Aufbau des Explosionsschutzventils zu erläutern. So ist der erwähnte Schließkörper 7 als rotrationssymmetrischer, im Querschnitt etwa elliptischer Hohlkörper ausgebildet, der in der in Fig. 2 und 3 dargestellten Offenstellung von einem Medium umströmt werden kann. Die Formgebung des Schließkörpers 7 mit einer sogenannten Störkante 10 am Umfang und Dichtkanten 11 ist beispielsweise aus der eingangs genannten EP 1 579 134 B1 bekannt und bedarf keiner nochmaligen Erörterung an dieser Stelle.

Der Schließkörper 7 ist an einem Trägerrohr 12 befestigt, das zur mittelbaren Lagerung des Schließkörpers 7 auf einer zentralen, längsaxial angeordneten Führungsstange 13 über Gleitbuchsen 14, 15 längsaxial verschiebbar geführt ist. Die Führungsstange 13 selbst ist an ihren Enden jeweils in zylindrischen Haltestücken 16, 17 befestigt, die zur Optimierung der Strömungsverhältnisse durch das Ventil in Richtung der Flansche 8, 9 jeweils konisch verjüngt gestaltet sind. Die Haltestücke 16, 17 wiederum sind über vier noch näher zu erläuternde Aufhängungen A zentral in den rohrförmigen Gehäuseabschnitten 5, 6 der Gehäusehälften 3, 4 gehalten.

Zwischen der Führungsstange 13 und dem Trägerrohr 12 ist eine vorgespannte Schraubendruckfeder 18 eingesetzt, die sich einerseits an der fest mit der Führungsstange 13 verbundenen, (bezogen auf Fig. 2) linken Gleitbuchse 14 und andrerseits an der am rechten Ende des Trägerrohrs 12 befestigten, (bezogen auf Fig. 2) rechten Gleitbuchse 15 abstützt. Damit ist das Trägerrohr 12 entgegen der Schließbewegungsrichtung SB des Schließkörpers 7 - also nach rechts bezogen auf Fig. 2 und 3 - beaufschlagt und in Anlage im Haltestück 17 gehalten. Der Schließkörper 7 befindet sich damit in der in den Fig. 2 und 3 gezeigten Öffnungsstellung des Explosionsschutzventils und kann bei spezifizierten Strömungsgeschwindigkeiten eines durch das Ventil fließenden Mediums in dieser Öffnungsstellung stabil verharren.

Bei einer das Explosionsschutzventil in der Schließbewegungsrichtung durchlaufenden Explosionsdruckwelle wird der Schließkörper 7 entgegen der Beaufschlagung durch die Schraubendruckfeder 18 in diese Richtung schlagartig mitgenommen und mit seiner Dichtkante 11 gegen einen an der Innenseite des Gehäuses 1 angeordneten Dichtungsring 19 gepresst und das Explosionsschutzventil damit geschlossen. Damit sind die auf der der Explosionsquelle gegenüber liegenden Seite des Schliesskörpers angeordneten Anlagenteile, die über eine abgehende Rohrleitung am linken Flansch 8 angebunden sind, von der Explosionsdruckwelle geschützt und vom störseitigen Anlagenteil entkoppelt. In der in den Figuren nicht dargestellten Schließstellung des Schließkörpers 7 wird dieser über eine noch näher zu erörternde Verriegelungsvorrichtung V verriegelt, so dass das Ventil bis zu seiner manuell veranlassbaren Rücksetzung geschlossen bleibt.

Im Folgenden wird anhand der Fig. 2 bis 4 die spezielle Ausgestaltung des mit der Dichtkante 11 des Schließkörpers 7 zusammenwirkenden Dichtungsringes 19 des Explosionsschutzventils näher erläutert. So ist für die Aufnahme des Dichtungsringes 19 an der Innenseite 20 des Gehäuses 1 am Übergang des rohrförmigen Gehäuseabschnitts 5 zu der radialen Erweiterung in Richtung der Flanschverbindung 2 hin eine umlaufende, entgegen der Schließbewegungsrichtung SB offene Aufnahmetasche 21 zur Halterung des Dichtungsringes 19 vorgesehen. Auf ihrer radial nach innen weisenden Seite ist diese Aufnahmetasche 21 durch den Endbereich 22 des rohrförmigen Gehäuseabschnittes 5 selbst gebildet. Diesen umgibt der im Querschnitt abgekantete Schulterbereich 23 der Gehäusehälfte 3. In dieser Aufnahmetasche 21 ist der Dichtungsring 19 mit einem Verankerungsabschnitt 24 eingesteckt, der entsprechend der Querschnittsform der Aufnahmetasche 21 eine im Wesentlichen flach-rechteckige Querschnittsform aufweist. Auf der radial innen liegenden Seite können Rippen oder Widerhaken vorgesehen sein. Dadurch ist der massive Verankerungsabschnitt flexibler bei der Montage, bietet jedoch genügend Kraft gegen das Herausziehen auf. Die Einstecklänge E des Verankerungsabschnittes parallel zur Schließbewegungsrichtung SB ist dabei um etwa ein Drittel größer als die radiale Dicke D des Verankerungsabschnittes 24. Zur Festlegung des Verankerungsabschnittes 24 in der Aufnahmetasche 21 weist letztere radial außen am Schulterbereich 23 eine umlaufende Eindrückung 25 auf, mit der eine Formschlussverbindung zwischen Verankerungsabschnitt 24 und Aufnahmetasche 21 hergestellt wird.

Ein mit der Dichtkante 11 des Schließkörpers 7 in Schließstellung des Ventils zusammenwirkender Dichtabschnitt 26 des Dichtungsringes 19 liegt außerhalb der Aufnahmetasche 21 und entgegen der Schließbewegungsrichtung SB davor. Der Dichtungsabschnitt 26 greift also nicht in den freien Strömungsquerschnitt des rohrförmigen Gehäuseabschnitts 5 der Gehäusehälfte 3 hinein. Vielmehr geht er an seinem radial nach innen weisenden Rand 27 glatt in den rohrförmigen Gehäuseabschnitt 5 über, wozu der Rand 27 als der Wandungsdicke des rohrförmigen Gehäuseabschnitts 5 entsprechender Vorsprung ausgebildet ist. Ausgehend von dort ist die vom Medium durch das Ventil angeströmte Innenkontur 28 des Dichtabschnittes 26 nach außen ballig unter Ausbildung eines Viertelkreises im Querschnitt geformt. Weiter geht dann die Innenkontur 28 zum radial nach außen weisenden Rand 29 hin in eine umlaufende Dichtlippe 30 über, mit der der Dichtabschnitt 26 an die Innenseite 20 der Gehäusehälfte 3 anschließt.

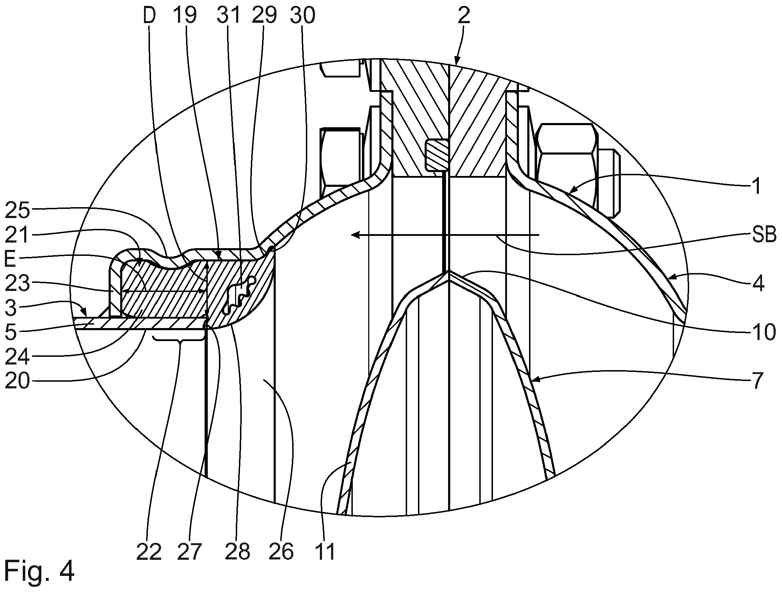

Durch die vorstehend erörterte Formgebung des Dichtungsringes 19 insbesondere im Bereich des Dichtabschnittes 26 wird - wie insbesondere aus Fig. 4 hervorgeht - der freie Querschnitt des Ventils zwischen offenem Schließkörper 7 und Innenseite 20 des Gehäuses 1 strömungstechnisch optimiert, da die Übergänge relativ glattflächig ausgestaltet, keine Hinterschneidungen vorgesehen und keine Teile der Dichtung in den freien Querschnitt des rohrförmigen Gehäuseabschnittes 5 eingreifen. Dies hat auch Vorteile hinsichtlich einer Vermeidung von Produktrückständen und damit einer verbesserten Hygiene bei entsprechendem Einsatz des Ventils in sensiblen Branchen wie Anlagen zur Herstellung von Nahrungsmittel oder Pharmazeutika.

Wie weiter insbesondere aus Fig. 4 hervorgeht, ist im Dichtabschnitt 26 des Dichtungsringes 19 eine umlaufende, strukturierte Hohlkammer 31 vorgesehen, wodurch der Dichtungsring 19 dort eine besondere Flexibilität erhält. Diese trägt dazu bei, dass der Schließkörper 7 mit seiner Dichtkante 11 sauber und satt anliegen kann. Dabei können Toleranzen innerhalb der gesamten Anordnung aufgrund der Schweißverbindungen, Montageabweichungen und Unrundheiten des Schließkörpers 7 wirkungsvoll ausgeglichen werden.

Bei der in Fig. 6 gezeigten Weiterbildung des Dichtungsringes 19 sind auf der radial inneren Seite des Verankerungsabschnittes 24 entgegen der Einsteckrichtung ER weisende, rampenartige Widerhaken-Verankerungsvorsprünge 59 angeformt, die der oben beschriebenen Montagevereinfachung und Stabilisierung der Verankerung des Dichtungsringes 19 in der Aufnahmetasche 21 dienen. Auf der radial äußeren Seite des Dichtungsring 19 gemäß Fig. 6 ist noch eine flache, im Querschnitt kreisabschnittförmige Nut 60 dargestellt, die mit der Eindrückung 25 am Gehäuse 1 zusammenwirkt.

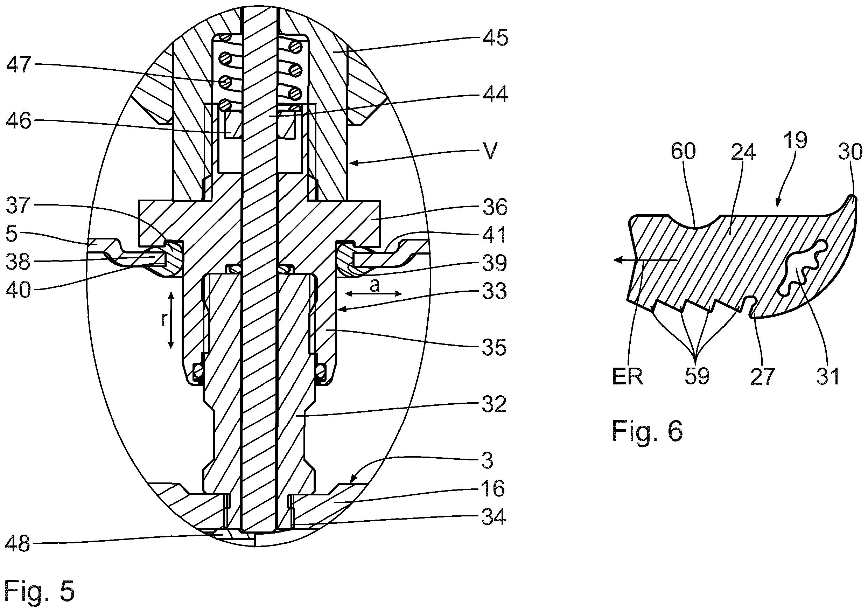

Anhand der Fig. 2, 3 und 5 wird nun der weitere Aufbau des Explosionsschutzventils hinsichtlich der Aufhängung A und der Verriegelungsvorrichtung V sowie seiner Funktionsweise näher beschrieben. Die erwähnten Aufhängungen A der Haltestücke 16, 17 sind - bis auf die Ausrüstung noch näher zu erörternder Funktionsmittel - bei beiden Haltestücken 16, 17 vom Grundsatz her übereinstimmend ausgebildet. Die vier im gezeigten Ausführungsbeispiel vorhandenen Aufhängungen A werden demgemäß anhand der in Fig. 2 mit der Einzelheit V umkreisten und in Fig. 5 vergrößert dargestellten Einheit näher erörtert. Die Haltestücke 16, 17 tragen dabei als Lageranordnung L die jeweiligen Enden der Führungsstange 13 und sind über eine Aufhängetraverse 32 und einen diese haltenden Aufnahmeadapter 33 unter spielbehafteter Lagerung an der jeweiligen Gehäusehälfte 3, 4 des Gehäuses 1 gehalten. Dazu ist die Aufhängetraverse 32 in ein entsprechendes Innengewinde 34 im Haltestück 16, 17 eingeschraubt. Gleichermaßen wird die Aufhängetraverse 32 von einer Gewindebuchse 35 am Aufnahmeadapter 33 aufgenommen. Letzterer weist eine Ringschulter 36 auf, mit der sich der Aufnahmeadapter 33 auf einem flexiblen Haltering 37 abstützt. Letzterer ist auf dem Rand 38 der den Aufnahmeadapter 33 beherbergenden Aufnahmeöffnung 39 nach Art eines Kantenschutzprofils befestigt. Dazu sitzt der Haltering 37 mit seiner Lagernut 40 auf dem Rand der Aufnahmeöffnung 39. Wie insbesondere aus Fig. 5 deutlich wird, ist der Aufnahmeadapter 33 durch die gezeigte Konstruktion spielbehaftet gelagert. Sein Lagerspiel wirkt sowohl in radialer Richtung r als auch in axialer Richtung a (Fig. 5). Wie besonders aus Fig. 3 und 5 deutlich wird, sind die Aufnahmeöffnungen 39 für die Aufhängungen A jeweils im Bereich planer Lagerflächen 41 an den ansonsten zylindrischen Gehäuseabschnitten 5, 6 angeordnet. Diese planen Lagerflächen 41 sind in die entsprechenden Gehäuseabschnitte 5, 6 eingeprägt.

Für eine stabile Halterung der beiden Haltestücke 16, 17 werden die jeweiligen Aufhängetraversen 32 mit den Aufnahmeadaptern 33 in die entsprechenden Aufnahmeöffnungen 39 eingesetzt und die jeweiligen Gewindeverbindungen über das Innengewinde 34 und die Gewindebuchse 35 angezogen. Etwaige Maßabweichungen innerhalb der Konstruktionsteile werden dabei durch die spielbehaftete Lagerung der Aufnahmeadapter 33 in den Aufnahmeöffnungen 39 über die flexiblen Halteringe 37 ausgeglichen.

Bei dem rechten Haltestück 17 dient die Aufhängung A nur zum Lagern des Haltestücks 17. Dementsprechend ist der Aufnahmeadapter 33 dort als Verschlussdeckel 42 nach außen abgeschlossen ausgebildet.

Die beiden Aufhängungen A des in Schließbewegungsrichtung SB, also der Explosionsquelle gegenüber liegenden Seite vom Schließkörper 7 liegenden Haltestücks 16, sind mit zusätzlichen Funktionsmitteln belegt, nämlich zum einen die bezogen auf Fig. 2 und 3 obere Aufhängung A mit der Verriegelungsvorrichtung V und zum anderen die untere Aufhängung A mit einer Abtasteinrichtung C. Diese Aufhängungen A erfüllen also eine Doppelfunktion, indem sie zum einen das Haltestück 16 lagern und zum anderen den Zugriff der zusätzlichen Funktionsmittel auf die Funktionsmechanik des Explosionsschutzventils gewährleisten.

Diese Funktionsmechanik weist an den Enden des Trägerrohrs 12 ein als Konusstumpf ausgebildetes Fangstück 43 auf, wobei im gezeigten Ausführungsbeispiel lediglich das auf der Seite der Verriegelungsvorrichtung V sitzende Fangstück 43 funktionsrelevant ist. Das am anderen Ende angeordnete Fangstück 43 hat zum einen eine funktionale Bedeutung dann, wenn statt des gezeigten unidirektional wirkenden Explosionsschutzventils ein bidirektionales Ventil verwendet wird. Zum anderen hat es bei dem gezeigten, unidirektional wirkenden Ventil die Funktion, die Mittelstellung des Schließkörpers gegenüber der Flanschverbindung 2 einstellen zu können. Dafür wäre die in den Fig. 2 und 3 gezeigte Konstruktion an der Trennebene T der Flanschverbindung 2 spiegelsymmetrisch mit beiderseitigen Verriegelungsvorrichtungen V und Abtasteinrichtungen C aufzubauen.

Die in die links oben angeordnete Aufhängung A integrierte Verriegelungsvorrichtung V weist als zentrales Teil eine radial verlaufende Verriegelungsstange 44 auf, die in einem auf den Adapter 33 geschraubten Sockel 45, im Aufnahmeadapter 33 selbst und in der Aufhängetraverse 32 radial verschiebbar geführt ist. Über einen Bund 46 wirkt eine als Schraubendruckfeder ausgebildete Auslösefeder 47, um die Verriegelungsstange 44 im Auslösefall radial nach innen zu stoßen. In der gezeigten Ruhestellung ist die Verriegelungsstange 44 nach oben zurückgezogen und wird in dieser Ruhestellung von einer im Haltestück 16 axial verschiebbaren Stützbuchse 48 zurückgehalten. Letztere ist entgegen der Schließbewegungsrichtung SB von einer weiteren Schraubdruckfeder 49 beaufschlagt.

Am oberen Ende des Sockels 45 ist eine Rückholmechanik 50 ausgeführt, die durch offenkundige Vorbenutzung bekannt ist. Da diese Rückholmechanik 50 für die Erfindung selbst keine zentrale Bedeutung hat, soll zur Vermeidung unnötiger Länglichkeiten auf eine detaillierte Beschreibung verzichtet werden.

Auf der der Verriegelungsvorrichtung V gegenüberliegenden Seite ist die Abtasteinrichtung C in die Aufhängung A integriert, wobei in diesem Falle eine Taststange 51 im Aufnahmeadapter 33 und der entsprechenden Aufhängetraverse 32 radial verschiebbar geführt ist. Auf den Aufnahmeadapter 33 ist eine Lagerkappe 52 aufgeschraubt, in die wiederum eine Schraubendruckfeder 53 zur Beaufschlagung der Taststange 51 über einen daran befestigten Bund 54 in radialer Richtung nach innen eingesetzt ist. Am aus der Lagerkappe 52 hinausragenden Ende der Taststange 51 ist ein Taststück 55 angebracht, das mit einem Näherungsschalter 56 zusammenwirkt. Letzterer ist an einer Lagerstrebe 57 unten am rohrförmigen Gehäuseabschnitt 5 gehalten. Alternativ kann auch ein mechanischer Schalter angebracht werden, der in radialer Verlängerung der Taststange 51 angebracht und auch an der Lagerstrebe 57 mittels eines Adapterblechs montiert ist.

Bei einer das Explosionsschutzventil durchlaufenden, schlagartigen Druckwelle aufgrund einer Explosion in einem rechts vom gezeigten Ventil liegenden Anlagenteil wird durch die Druckbeaufschlagung der Schließkörper 7 schlagartig entgegen der Kraft der Schraubendruckfeder 18 in Schließbewegungsrichtung SB nach links bezogen auf Fig. 2 und 3 verschoben und dichtet das Ventil in seiner Schließstellung durch Anlage gegen den Dichtungsring 19 ab. Mit der Bewegung des Schließkörpers 7 wird das Trägerrohr 12 mit dem Fangstück 43 verschoben, das gegen die im Haltestück 16 verschiebbar gelagerte Stützbuchse 48 schlägt und diese ebenfalls entgegen der Wirkung der Schraubendruckfeder 49 nach links verschiebt. Dadurch kommt die Verriegelungsstange 44 frei, die bei entsprechender Auslenkung des Trägerrohrs 12 mit dem Schließkörper 7 nach links hinter die rückwärtige Fangkante 58 des Fangstücks 43 einfährt. Damit wird der Schließkörper 7 und entsprechend das Explosionsschutzventil in seiner geschlossenen Stellung verriegelt.

Bei dem beschriebenen Auslösevorgang schiebt gleichzeitig der konische Frontabschnitt des Fangstücks 43 die über einen Schlitz in der Stützbuchse 48 nach innen eingreifende Taststange 51 entgegen der Wirkung der Schraubendruckfeder 53 nach außen. Dadurch fährt das Taststück 55 vom Näherungsschalter 56 weg, wodurch dieses ein elektrisches Signal an eine entsprechende (nicht dargestellte) Steuerung abgeben kann, dass das Explosionsschutzventil ausgelöst hat. Je nach benötigtem Signal der Steuerung kann alternativ auch das Halteblech des Näherungsschalters 56 um 180° gedreht werden und das Taststück 55 fährt in den Tastbereich des Näherungsschalters 56. Bei Verwendung eines mechanischen Schalters entfällt das Taststück und die Taststange betätigt direkt den mechanischen Schalter.

Für die Rückkehr des Explosionsschutzventils in die in Fig. 2 und 3 gezeigte Offenstellung wird über die Rückholmechanik 50 die Verriegelungsstange 44 nach oben zurückgefahren. Dadurch kommt das Fangstück 43 frei, das Trägerrohr 12 mit dem Schließkörper 7 kann unter dem Einfluss der Schraubendruckfeder 18 wieder in die Offenstellung zurückfahren. Dabei wird die Stützbuchse 48 wieder in die in Fig. 2 gezeigte Stützstellung unter der zurückgefahrenen Verriegelungsstange 44 verbracht. Gleichzeitig kann die Taststange 51 wieder unter dem Einfluss der Schraubendruckfeder 53 in die in Fig. 2 und 3 gezeigte Taststellung innerhalb der Stützbuchse 48 einfahren.

## Patentansprüche

1. Explosionsschutzventil zur Entkopplung von Anlagen- oder Werkteilen insbesondere zum Einbau in eine Rohrleitung, umfassend
- ein Gehäuse (1),
- einen innerhalb des Gehäuses (1) an einer Führungsstange (13) axial geführten Schließkörper (7), der aus einer definierten Offenstellung bei einer Druck- oder Sogwelle in der Rohrleitung in wenigstens einer Schließbewegungsrichtung (SB) in eine dichtende Schließstellung verschiebbar ist, in der der Schließkörper (7) mittels einer Verriegelungsvorrichtung (V) festlegbar ist,
- eine mit dem Schließkörper (7) in Wirkverbindung stehende Federanordnung (18) an der Führungsstange (13) zum Halten des Schließkörpers (7) in der Offenstellung, und
- jeweils das Ende der Führungsstange (13) tragende Lageranordnungen (L), die jeweils über mindestens eine Aufhängetraverse (32) an das Gehäuse (1) angebunden sind,
**gekennzeichnet durch**
- eine spielbehaftete Lagerung der mindestens einen Aufhängetraverse (32) in einer Aufnahmeöffnung (39) am Gehäuse (1).

2. Explosionsschutzventil nach Anspruch 1, **dadurch gekennzeichnet, dass** die mindestens eine Aufhängetraverse (32) über einen in einem flexiblen Haltering (37) sitzenden Aufnahmeadapter (33) mittelbar am Gehäuse (1) gelagert ist.

3. Explosionsschutzventil nach Anspruch 2, **dadurch gekennzeichnet, dass** der flexible Haltering (37) nach Art eines Kantenschutzprofils mit einer Lagernut (40) auf dem Rand (38) der Aufnahmeöffnung (39) des Gehäuses (1) befestigt ist.

4. Explosionsschutzventil nach einem der vorgenannten Ansprüche,
**dadurch gekennzeichnet, dass** das Lagerspiel der mindestens einen Aufhängetraverse (32) in radialer und axialer Richtung wirkt.

5. Explosionsschutzventil nach einem der vorgenannten Ansprüche, **gekennzeichnet durch** eine am ansonsten rohrförmigen Gehäuseabschnitt (5, 6) des Gehäuses (1) angelegte, plane Lagerfläche (41) für die Lagerung der mindestens einen Aufhängetraverse (32) in der Aufnahmeöffnung (39).

6. Explosionsschutzventil nach Anspruch 5, **dadurch gekennzeichnet, dass** die plane Lagerfläche (41) in den rohrförmigen Gehäuseabschnitt (5, 6) eingeprägt ist.

7. Explosionsschutzventil nach einem der vorgenannten Ansprüche,
**dadurch gekennzeichnet, dass** in die mindestens eine Aufhängetraverse (32) Funktionsmittel, insbesondere eine Verriegelungsstange (44) der Verriegelungsvorrichtung (V) und/oder eine Taststange (51) einer Abtasteinrichtung (C) für die Ventilstellung, integriert sind.

8. Explosionsschutzventil nach Anspruch 7, **dadurch gekennzeichnet, dass** alle in das Gehäuse (eines) eingreifenden Funktionsmittel jeweils in eine Aufhängung (A) integriert sind.

9. Explosionsschutzventil nach Anspruch 7 oder 8, **dadurch gekennzeichnet, dass** alle Aufhängetraversen (32) für die Aufnahme von Funktionsmitteln eingerichtet sind.

10. Explosionsschutzventil nach einem oder mehreren der Ansprüche 7 bis 9, **dadurch gekennzeichnet, dass** bei Aufhängetraversen (32) ohne Belegung mit Funktionsmitteln ein als Verschlussdeckel (42) ausgebildeter Aufnahmeadapter zur Lagerung der Aufhängetraverse (32) in der Aufnahmeöffnung (39) vorgesehen ist.

## Claims

1. An explosion protection valve for decoupling system parts or parts of a plant, in particular for the installation in a pipeline, comprising
- a housing (1),
- a closing body (7) which is axially guided inside the housing (1) on a guide rod (13) and can be shifted from a defined open position in the event of a pressure or suction wave in the pipeline in at least one closing movement direction (SB) into a sealing closed position in which the closing body (7) can be fixed by means of a locking device (V),
- a spring assembly (18), which is in operative connection to the closing body (7), on the guide rod (13) for holding the closing body (7) in the open position, and
- bearing assemblies (L) each carrying the end of the guide rod (13), which are each connected to the housing (1) by means of at least one suspension cross-member (32),
**characterized by**
- a bearing arrangement, which is subject to play, of the at least one suspension cross-member (32) in a receiving opening (39) on the housing (1).

2. An explosion protection valve according to claim 1, **characterized in that** the at least one suspension cross-member (32) is indirectly mounted on the housing (1) via a receiving adapter (33) located in a flexible retaining ring (37).

3. An explosion protection valve according to claim 2, **characterized in that** the flexible retaining ring (37) is fastened in the manner of an edge protection profile with a bearing groove (40) on the rim (38) of the receiving opening (39) of the housing (1).

4. An explosion protection valve according to any one of the preceding claims, **characterized in that** the bearing play of the at least one suspension cross-member (32) acts in radial and axial direction.

5. An explosion protection valve according to any one of the preceding claims, **characterized by** a planar bearing surface (41) applied to the otherwise tubular housing portion (5, 6) of the housing (1) for the bearing arrangement of the at least one suspension cross-member (32) in the receiving opening (39).

6. An explosion protection valve according to claim 5, **characterized in that** the planar bearing surface (41) is embossed in the tubular housing portion (5, 6).

7. An explosion protection valve according to any one of the preceding claims, **characterized in that** functional means, in particular a locking rod (44) of the locking device (V) and/or a sensing rod (51) of a sensing device (C) for the valve position, are integrated into the at least one suspension cross-member (32).

8. An explosion protection valve according to claim 7, **characterized in that** all functional means engaging in the housing (one) are each integrated in a suspension (A).

9. An explosion protection valve according to claim 7 or 8, **characterized in that** all suspension cross-members (32) are arranged for receiving functional means.

10. An explosion protection valve according to one or more of claims 7 to 9, **characterized in that,** in the case of suspension cross-members (32) not occupied by functional means, a receiving adapter designed as a closure lid (42) is provided for bearing the suspension cross-member (32) in the receiving opening (39).

## Revendications

1. Soupape antidéflagrante pour le désaccouplement de parties d'installation ou d'usine, en particulier pour le montage dans une tuyauterie, comprenant
- un boîtier (1),
- un corps de fermeture (7), guidé axialement à l'intérieur du boîtier (1) sur une tige de guidage (13), qui peut être déplacé d'une position ouverte définie en cas d'onde de pression ou d'aspiration dans la tuyauterie dans au moins une direction de mouvement de fermeture (SB) dans une position de fermeture étanche, dans laquelle le corps de fermeture (7) peut être fixé au moyen d'un dispositif de verrouillage (V),
- un dispositif à ressort (18) en liaison active avec le corps de fermeture (7) sur la tige de guidage (13) pour maintenir le corps de fermeture (7) dans la position ouverte, et
- des agencements de paliers (L) portant chacun l'extrémité de la tige de guidage (13), qui sont reliés chacun au boîtier (1) par au moins une traverse de suspension (32),
**caractérisé par**
- un montage avec jeu de ladite au moins une traverse de suspension (32) dans une ouverture de réception (39) sur le boîtier (1).

2. Soupape antidéflagrante selon la revendication 1, **caractérisée en ce que** ladite au moins une traverse de suspension (32) est montée indirectement sur le boîtier (1) par l'intermédiaire d'un adaptateur de réception (33) logé dans une bague de retenue flexible (37).

3. Soupape antidéflagrante selon la revendication 2, **caractérisée en ce que** la bague de retenue flexible (37) est fixée à la manière d'un profilé de protection d'arête avec une rainure de palier (40) sur le bord (38) de l'ouverture de réception (39) du boîtier (1).

4. Soupape antidéflagrante selon l'une quelconque des revendications précédentes, **caractérisée en ce que** le jeu de palier de ladite au moins une traverse de suspension (32) agit dans la direction radiale et axiale.

5. Soupape antidéflagrante selon l'une quelconque des revendications précédentes, **caractérisée par** une surface d'appui plane (41), appliquée sur la section de boîtier (5, 6) par ailleurs tubulaire du boîtier (1), pour le montage de ladite au moins une traverse de suspension (32) dans l'ouverture de réception (39).

6. Soupape antidéflagrante selon la revendication 5, **caractérisée en ce que** la surface d'appui plane (41) est emboutie dans la section de boîtier tubulaire (5, 6).

7. Soupape antidéflagrante selon l'une quelconque des revendications précédentes, **caractérisée en ce que** des moyens fonctionnels, en particulier une tige de verrouillage (44) du dispositif de verrouillage (V) et/ou une tige de palpage (51) d'un dispositif de détection (C) de la position de la soupape, sont intégrés dans ladite au moins une traverse de suspension (32).

8. Soupape antidéflagrante selon la revendication 7, **caractérisée en ce que** tous les moyens fonctionnels s'engageant dans le boîtier (un) sont intégrés chacun dans une suspension (A).

9. Soupape antidéflagrante selon la revendication 7 ou 8, **caractérisée en ce que** toutes les traverses de suspension (32) sont aménagées pour recevoir des moyens fonctionnels.

10. Soupape antidéflagrante selon une ou plusieurs des revendications 7 à 9, **caractérisée en ce que,** dans le cas de traverses de suspension (32) sans occupation par des moyens fonctionnels, il est prévu un adaptateur de réception réalisé sous forme de couvercle de fermeture (42) pour le montage de la traverse de suspension (32) dans l'ouverture de réception (39).
